# EUROPEAN PATENT SPECIFICATION

(11) **EP 2 407 677 B1**
(45) Date of publication and mention of the grant of the patent: **06.03.2013**
(21) Application number: 10169823.1
(22) Date of filing: 16.07.2010
(51) Int. Cl.: F16C 11/10, F16M 11/12, F16M 11/14

(54) **Angular adjusting structure**
Winkelverstellanordnung
Structure d'ajustement angulaire

(43) Date of publication of application: 18.01.2012
(73) Proprietor: Giga-Byte Technology Co., Ltd., Taipei 231 (TW)
(72) Inventor: Chen, Shu-I, Hsin Tian, Taipei County 231 (TW); Ma, Mou-Ming, Hsin Tien, Taipei County 231 Chinese Taipei (TW)
(74) Representative: Schwerbrock, Florian

(56) References cited:
- DE-U1- 8 423 446
- GB-A- 2 005 760
- JP-A- 9 133 152
- US-A- 4 976 468
- US-A1- 2003 108 379
- US-B1- 7 336 258

## Description

### BACKGROUND OF THE INVENTION

### 1. Field of the Invention

The present invention relates to an angular adjustment mechanism, more particularly to an angular adjustment mechanism for use in an operation device such that the operation device can be adjusted in three-dimensional directions relative to a support base.

### 2. Description of the Prior Art

Nowadays, the use of PCs (personal computers) becomes longer and longer as days passed by, and a keyboard or mouse is generally used as input device. Long term use of PC (personal computer) usually discomforts and fatigues a user's hands and muscles. In order to remedy the muscle strain or hand's fatigue of the computer operator, keyboard or mouse of present days are designed and constructed ergonomically to suit an individual needs.

However, the abovementioned keyboard or mouse is constructed generally as a stand-alone device, that is, the article is movable on a support surface but its structure is not designed ergonomically to fit an individual user or its angular position relative to an individual user and is unable to be adjusted, thereby unable to satisfy the individual user of the computer set. Please refer to the following documents for references: Japan patent application (Pub. No. 09-133152) disclosing a universal joint; US patent (Pat. No. 4976468) disclosing a connective joint with interlocking ring structures; US patent application (Pub. No. 2003/108379) disclosing a high axial stiffness swivel joint; and US patent (Pat. No. 7336258) disclosing an adjustable computer mouse stand.

### Summary of the invention

In order to remedy the aforesaid drawbacks, the object of the present invention is to provide an angular adjustment mechanism that is to be applied in an operation device such that the device can be adjusted in three dimensional directions and changing of the inclination position of the operation device is suitable for an individual user since the individual user can adjust the device according to his or her required inclination or angle.

The angular adjustment mechanism of the present invention accordingly includes a limiting unit, a lower clamping unit, a bottom seat unit, an upper clamping unit and a top cover unit. The limiting unit is formed with a first guiding channel lying along a first imaginary plane and a second guiding channel lying along a second imaginary plane. The lower clamping unit has a U-shaped structure and is received within the first guiding channel along the first imaginary plane. The bottom seat unit is disposed below and supports the lower clamping unit from underneath. The upper clamping unit has an inverted U-shaped structure and is received within the second guiding channel along the second imaginary plane such that the lower and upper clamping units are located at two opposite sides of the limiting unit with the first and second imaginary planes crossing perpendicularly each other. The top cover unit is disposed above and is connected to the upper clamping unit.

When adjusting position of the lower clamping unit and the limiting unit along the first imaginary plane and the upper clamping unit and the limiting unit along the second imaginary plane results in changing an angular position of the top cover unit relative to the bottom seat unit.

The angular adjustment mechanism of the present invention further includes a fixing member in the form of an annular structure and surrounding the limiting unit in such a manner that portions of the lower and upper clamping units are clamped between the fixing member and the limiting unit, thereby disposing the top cover unit at an inclination position relative to the bottom seat unit.

As mentioned above, the angular adjustment mechanism of the present invention can be applied in an operation device in order to alter an inclination of the operation device. Changing of the inclination position of the operation device is fitting workplace conditions, hence effective since conforming to ergonomics. In addition, it is easy to manipulate the adjustment mechanism of the present invention in three dimensional directions and is suitable for every individual user, because each individual user can adjust the device to a specific or required inclination in accordance to his or her desire and wishes.

### BRIEF DESCRIPTION OF THE DRAWINGS

Other features and advantages of this invention will become more apparent in the following detailed description of the preferred embodiment of this invention, with reference to the accompanying drawings, in which:

Figure 1 is a perspective view of an angular adjustment mechanism of the present invention;

Figure 2 is an exploded view of the angular adjustment mechanism of the present invention;

Figure 3 is a cross-sectional view of the angular adjustment mechanism of the present invention along a first imaginary plane;

Figure 4 is a cross-sectional view of the angular adjustment mechanism of the present invention along a second imaginary plane; and

Figures 5 to 7 respectively show three different angular positions of the angular adjustment mechanism of the present invention relative to a support base.

### DETAILED DESCRIPTION OF THE PREFERRED EMBODIMENT

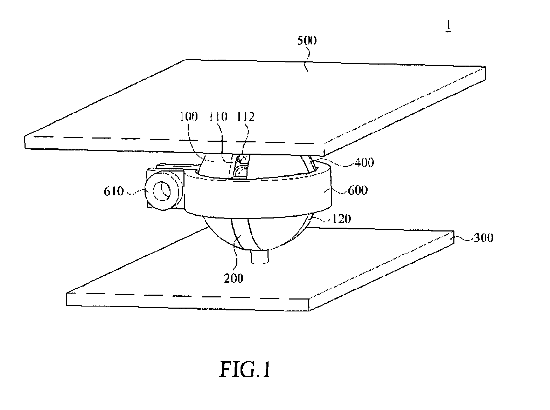

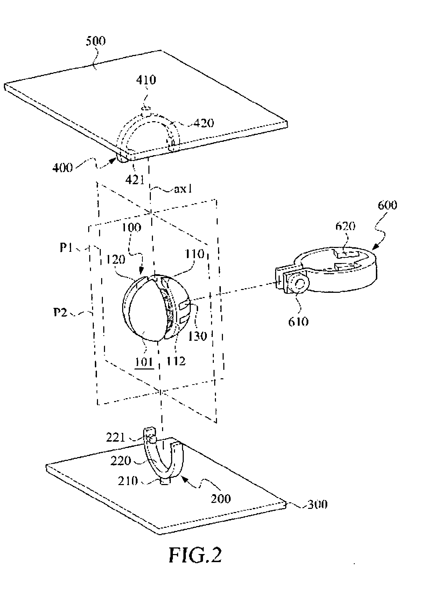

Referring to Figures 1 and 2, wherein Figure 1 shows a perspective view of an angular adjustment mechanism 1 of the present invention while Figure 2 shows an exploded view of the angular adjustment mechanism 1 of the present invention.

The angular adjustment mechanism 1 of the present invention is applied within an operation device or is used to support the operation device thereabove. The operation device can be a keyboard, mouse or joystick of a personal computer set. In the event, the angular adjustment mechanism 1 of the present invention is applied within the operation device, the top cover unit 500 and the bottom seat unit 300 of the angular adjustment mechanism 1 respectively serve as upper and lower casing halves (not shown) of the operation device or the top cover unit 500 serves as the lower casing half of the operation device. In addition, in the event the angular adjustment mechanism 1 of the present invention is used to support the operation device thereabove, the operation device should be fixed or mounted on the top cover unit 500. Under this condition, the individual user can use the angular adjustment mechanism 1 of the present invention to adjust the angular position of the top cover unit 500 relative to the bottom seat unit 300, thereby conforming to the ergonomic ability of an individual user.

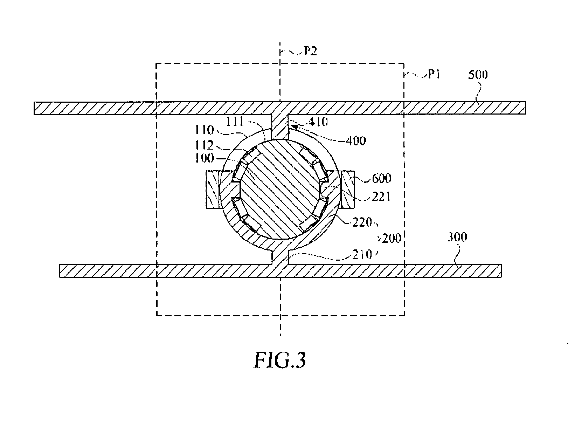

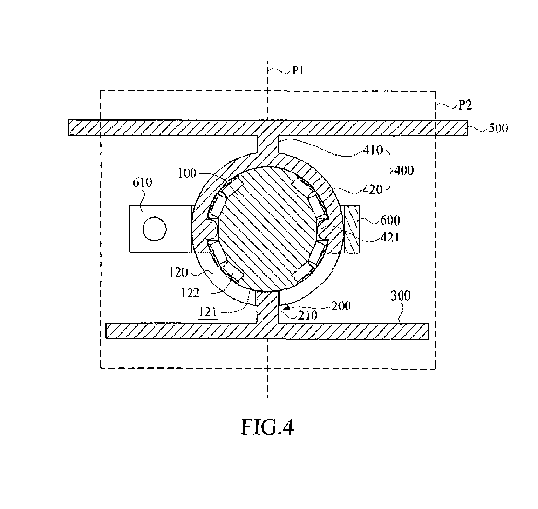

Referring to Figures 2 to 4, wherein Figure 3 is a cross-sectional view of the angular adjustment mechanism 1 of the present invention along a first imaginary plane P1 while Figure 4 is a cross-sectional view of the angular adjustment mechanism of the present invention along a second imaginary plane P2, which crosses the first imaginary plane P1 perpendicularly to define an axis ax1, since the limiting unit 100 is a ball structure, see the following paragraphs.

The angular adjustment mechanism 1 of the present invention accordingly includes a limiting unit 100 (in the form of a ball body), a lower clamping unit 200, a bottom seat unit 300, an upper clamping unit 400, a top cover unit 500 and a fixing member 600. In this preferred embodiment, the limiting unit 100 in fact is a fully rounded ball body; however the limitation should not be limited thereto only. The limiting unit 100 is formed with a first guiding channel 110 and a second guiding channel 120.

The limiting unit 100 includes a ball body having an exterior surface 101 indented to form the first guiding channel 110 therein surrounding the ball body and lying along the first imaginary plane P1 crossing the axis ax1. Thus, the first guiding channel 110 has a bottom wall 111 circumferentially surrounding the ball body. The bottom wall 111 of the first guiding channel 110 is formed with a plurality of spaced-apart first retention holes 112.

The exterior surface 101 of the ball body is further indented to form the second guiding channel 120 therein surrounding the ball body and lying along the second imaginary plane P2 crossing the axis ax1. Thus, the second guiding channel 120 has a bottom wall 121 circumferentially surrounding the ball body and lying along the second imaginary plane P2. The bottom wall 121 of the second guiding channel 120 is formed with a plurality of spaced-apart second retention holes 122 (see Figure 4).

The lower clamping unit 200 is a U-shaped structure and is received within the first guiding channel 110 along the first imaginary plane P1. The lower clamping unit 200 further includes a bottom connecting stub 210, two clamping lower arms 220 and a pair of lower limiting projections 221. The bottom connecting stub 210 is used for connecting to the bottom seat unit 300. The two clamping lower arms 220 extend upwardly and curvedly from the bottom connecting stub 210 along the first imaginary plane P1 in order to conform to the bottom wall 111 of the first guiding channel 110 in the exterior surface 101 of the ball body.

The lower limiting projections 221 project inwardly from two opposite ends of the lower arms 220 and extending into a corresponding pair of the first retention holes 112 in the first guiding channel 110.

The upper clamping unit 400 is an inverted U-shaped structure and is received within the second guiding channel 120 along the second imaginary plane P2 such that the lower and upper clamping units 200, 400 are located at two opposite sides of the ball body with the first and second imaginary planes P1, P2 crossing perpendicularly each other. The upper clamping unit 400 further includes an upper connecting stub 410, two clamping upper arms 420 and a pair of upper limiting projections 421. The upper connecting stub 410 is used for connecting to the top cover unit 500 from below. The two clamping upper arms 420 extend downwardly and curvedly from the upper connecting stub 410 along the second imaginary plane P2 in order to conform to the bottom wall 121 of the second guiding channel 120 in the exterior surface 101 of the ball body.

The upper limiting projections 421 project inwardly from two opposite ends of the upper arms 420 and extending into a corresponding pair of the second retention holes 122 in the second guiding channel 120.

Since the top cover unit 500 is connected to the upper clamping unit 400, the top cover unit 500 can be constructed as a plate member similar to that shown in Figure 2 in order to support the operation device thereabove. In addition, the top cover unit 500 may also serve as upper or lower casing half of the operation device (not shown). For instance, if the operation device is a mouse for PC (personal computer), the top cover unit 500 can be designed and constructed in dome shaped in order to permit gripping of the computer user or the top cover unit 500 can be designed and constructed for serving a lower casing half so that an upper casing half can be mounted on the lower casing half.

The bottom seat unit 300 is disposed below and supports the lower clamping unit 200 from underneath. The bottom seat unit 300 can be constructed as a plate member similar to that shown in Figure 2 in order to serve as the lower casing half of the operation device. For instance, if the operation device is a mouse for PC, the bottom seat unit 300 can be designed and constructed as the lower casing half while the top cover unit 500 can be designed and constructed for serving as the upper casing half so that the upper casing half can be mounted on the lower casing half.

The angular adjustment mechanism 1 of the present invention further includes a fixing member 600 in the form of an annular structure and surrounding the ball body in such a manner that at least portions of the lower and upper clamping units 200, 400 are clamped between the fixing member 600 and the limiting unit 100. In this preferred embodiment, the fixing member 600 is generally C-shaped and has two distal ends provided with a fastening structure 610 for fastening the distal ends when required. The exterior surface 101 of the ball body is formed with a pair of upper and lower engagement recesses 130 (see Figure 2). The fixing member 600 further has upper and lower pairs of engaging blocks 620 formed on an interior thereof and respectively engaging the engagement recesses 130 in the exterior surface 101 of the ball body. As illustrated in Figure 1, when the fixing member 600 is disposed around and fasten the limiting unit 100 therein, the lower arms 220 and the upper arms 420 are prevented respectively disengaging from the first and second guiding channels 110, 120. In other words, the lower limiting projections 221 and the upper limiting projections 421 are respectively prevented untimely disengaging from the first retention holes 112 in the first guiding channel 110 and the second retention holes 122 in the second guiding channel 120.

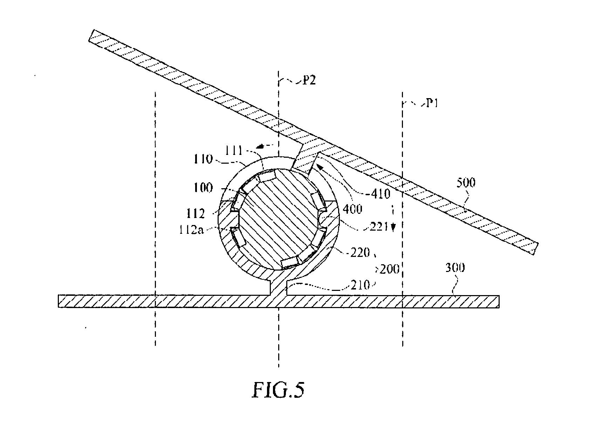

Referring to Figures 5 to 7, wherein Figures 5 to 7 respectively show three different angular positions of the angular adjustment mechanism 1 of the present invention relative to a support base. When it is desired to alter an angular position of the adjustment mechanism 1 of the present invention, you must first of all disassemble the fixing member 600 from the limiting unit 100. Then, you can rotate an assembly of the limiting unit 100 and the lower clamping unit 200 relative the first imaginary plane P1 so as to alter the angular position of the limiting unit 100 and the lower clamping unit 200, hence the position of the top cover unit 500 changes relative to the bottom seat unit 300. To be more specific, as best shown in Figure 5, the lower limiting projections 221 disengage from the pair of the first retention holes 112 and later extend and engage another pair the first retention holes 112a, thereby disposing the top cover unit 500 at an inclination position relative to the bottom seat unit 300.

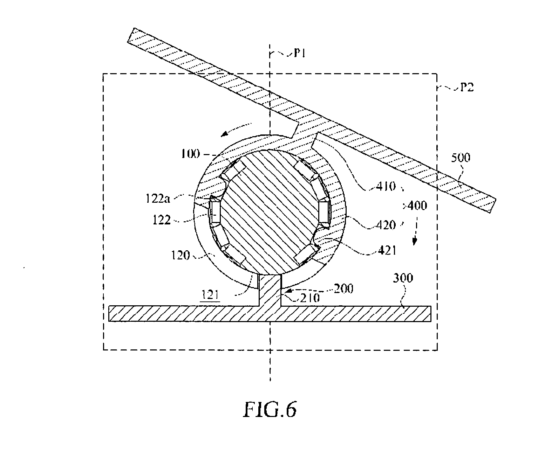

In the same manner, an assembly of the limiting unit 100 and the upper clamping unit 400 can be rotated relative to the second imaginary plane P2 so as to alter the angular position of the top cover unit 500 relative to the bottom seat unit 300. To be more specific, as best shown in Figure 6, the upper limiting projections 421 disengage from the pair of the second retention holes 122 and later extend and engage another pair the second retention holes 122a, thereby disposing the top cover unit 500 at an inclination position relative to the bottom seat unit 300. Since the position of the top cover unit 500 can be changed relative to the first and second imaginary planes P1, P2 as well as the horizontal plane, the top cover unit 500 is changeable relative to the bottom seat unit 300 in three dimensional directions.

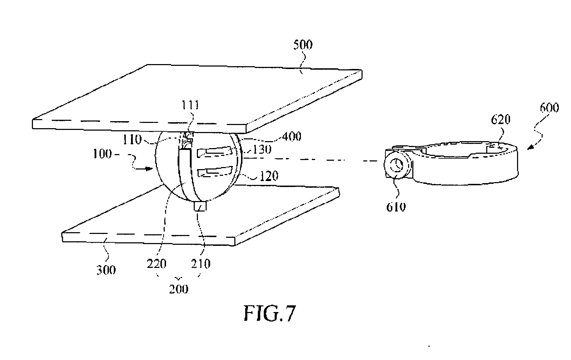

As best shown in Figure 7, after adjusting the position of the top cover unit 500 relative to the first and second imaginary planes P1, P2 and later relative to the bottom seat unit 300, you can fasten the fixing member 600 again around the limiting unit 100, thereby firmly securing the limiting unit 100, and the upper and lower clamping units 400, 200 therearound.

As explained above, the angular adjustment mechanism 1 of the present invention can be applied in an operation device in order to alter an inclination of the operation device and changing of the inclination position of the operation device is fitting workplace conditions, hence effective since conforming to ergonomics. In addition, it is easy to manipulate the adjustment mechanism 1 of the present invention in three dimensional directions and is suitable for every individual user, because each individual user can adjust the device to a specific or required inclination in accordance to his or her desire and wishes.

While the invention has been described in connection with what is considered the most practical and preferred embodiments, it is understood that this invention is not limited to the disclosed embodiments but is intended to cover various arrangements included within the scope of the broadest interpretation of the claims so as to encompass all such modifications and equivalent arrangements.

## Claims

1. An angular adjustment mechanism (1) comprising:
a limiting unit (100) formed with a first guiding channel (110) lying along a first imaginary plane (P1) and a second guiding channel (120) lying along a second imaginary plane (P2);
a lower clamping unit (200) having a U-shaped structure and being received within said first guiding channel (110) along said first imaginary plane (P1);
a bottom seat unit (300) disposed below and supporting said lower clamping unit (200) from underneath;
an upper clamping unit (400) having an inverted U-shaped structure and being received within said second guiding channel (120) along said second imaginary plane (P2) such that said lower and upper clamping units (200), (400) are located at two opposite sides of said limiting unit (100) with said first and second imaginary planes (P1), (P2) crossing perpendicularly each other;
a top cover unit (500) disposed above and connected to said upper clamping unit (400); and wherein, adjusting position of said lower clamping unit (200) and said limiting unit (100) along said first imaginary plane (P1) and said upper clamping unit (400) and said limiting unit (100) along said second imaginary plane (P2) results in changing an angular position of said top cover unit (500) relative to said bottom seat unit (300); **characterised by**
a fixing member (600) in the form of an annular structure and surrounding said limiting unit (100) in such a manner that at least portions of said lower and upper clamping units (200), (400) are clamped between said fixing member (600) and said limiting unit (100).

2. The angular adjustment mechanism (1) according to claim 1, wherein said lower clamping unit (200) further includes
a bottom connecting stub (210) for connecting to said bottom seat unit (300), and
two clamping lower arms (220) extending upwardly and curvedly from said bottom connecting stub (210) in order to conform to an exterior surface (101) of said limiting unit (100).

3. The angular adjustment mechanism (1) according to claim 1, wherein said upper clamping unit (400) further includes
an upper connecting stub (410) for connecting to said top cover unit (500) from below, and
two clamping upper arms (420) extending downwardly and curvedly from said upper connecting stub (410) in order to conform to an exterior surface (101) of said limiting unit (100).

4. The angular adjustment mechanism (1) according to claim 1, wherein said limiting unit (100) has an exterior surface (101) indented to form said first guiding channel (110) therein lying along said first imaginary plane (P1) and further indented to form said second guiding channel (120) therein lying along said second imaginary plane (P2).

5. (Currently Amended): The angular adjustment mechanism (1) according to claim 4, wherein said first guiding channel (110) has a bottom wall (111) formed with a plurality of spaced-apart first retention holes (112) while said second guiding channel (120) has a bottom wall (111) formed with a plurality of spaced-apart second retention holes (122).

6. The angular adjustment mechanism (1) according to claim 5, wherein said lower clamping unit (200) further has a pair of lower limiting projections (221) projecting inwardly from two opposite ends thereof and extending into a corresponding pair of said first retention holes (112) in said first guiding channel (110), said upper clamping unit (400) further having a pair of upper limiting projections (421) projecting inwardly from two opposite ends thereof and extending into a corresponding pair of said second retention holes (122) in said second guiding channel (120).

7. The angular adjustment mechanism (1) according to claim 1, wherein said fixing member (600) is generally C-shaped and has two distal ends provided with a fastening structure (610).

8. The angular adjustment mechanism (1) according to claim 7, wherein said exterior surface (101) of said limiting unit (100) is formed with an engagement recess (130), said fixing member (600) further having an engaging block (620) formed on an interior thereof and engaging said engagement recess (130) in said exterior surface (101) of said limiting unit (100).

9. The angular adjustment mechanism (1) according to claim 1 is applied in a keyboard, mouse or joystick of a personal computer such that said top cover unit (500) and said bottom seat unit (300) respectively serve as upper and lower casing halves of said keyboard, mouse or joystick.

10. The angular adjustment mechanism (1) according to claim 1 is used to support a keyboard, mouse or joystick of a personal computer thereabove such that said keyboard, mouse or joystick is mounted on said top cover unit (500).

11. The angular adjustment mechanism (1) according to claim 1 is used to support a keyboard, mouse or joystick of a personal computer thereabove such that said top cover unit (500) serves as a lower casing half of said keyboard, mouse or joystick.

## Patentansprüche

1. Ein Winkelverstellungs-Mechanismus (1), umfassend:
eine Begrenzungseinheit (100) mit einem ersten Führungskanal (110), der entlang einer ersten imaginären Ebene (P1), und einem zweiten Führungskanal (120), der entlang einer zweiten imaginären Ebene (P2) gebildet ist;
eine untere Klemmeinheit (200) mit einer U-förmigen Struktur und innerhalb des ersten Führungskanals (110) entlang der ersten imaginären Ebene (P1) aufgenommen;
einen unteren Sitz (300), angeordnet unterhalb des bzw abstützend die untere Klemmeinheit (200) von unten;
eine obere Klemmeinheit (400) mit einer umgekehrten U-förmige Struktur und derart aufgenommen innerhalb des zweiten Führungskanal (120) entlang der zweiten imaginären Ebene (P2), dass die unteren und oberen Klemmeeinheiten (200), (400) sich auf zwei einander gegenüberliegenden Seiten der besagten Begrenzungseinheit (100) befinden, wobei sich die erste und zweite imaginären Ebene (P1), (P2) senkrecht kreuzen miteinander kreuzen, [[und]]
eine obere Abdeckung (500), die oberhalb angebracht und mit der oberen Klemmeinheit (400) verbunden ist;
ein Befestigungselement (600) in der Form einer ringförmigen Struktur und die Begrenzungseinheit (100) in einer solchen Weise umgebend, dass wenigstens Abschnitte der unteren und oberen Klemmeinheiten (200), (400) zwischen dem Befestigungselement ( 600) und der Begrenzungseinheit (100) eingespannt sind;
**gekennzeichnet dadurch, dass** die Abgleichsposition der unteren Klemmeinheit (200) sowie die besagte Begrenzungseinrichtung (100) längs der ersten gedachten Ebene (P1) und der besagten oberen Klemmeinheit (400) sowie die besagte Begrenzungseinrichtung (100) längs der zweiten imaginären Ebene (P2) zu einer Änderung einer Winkelposition der oberen Abdeckung (500) relativ zu der unteren Sitz-Einheit (300) führt.

2. Der Winkelverstellungs-Mechanismus (1) nach Anspruch 1, wobei die besagte untere Klemmeinheit (200) desweiteren Folgendes umfasst:
einen unteren Anschlussstutzen (210) für den Anschluss der besagten unteren Sitz-Einheit (300) sowie
zwei untere Klemmarme (220), welche sich von besagtem unteren Anschlussstutzen (210) gekurvt nach oben erstrecken, um einer Außenfläche (101) der besagten Begrenzungseinheit (100) zu entsprechen.

3. Der Winkelverstellungs-Mechanismus (1) nach Anspruch 1, wobei die besagte obere Klemmeinheit (400) desweiteren Folgendes umfasst:
einen oberen Anschlussstutzen (410) für den Anschluss an besagte obere Abdeckungseinheit (500) von unten, sowie
zwei obere Klemmarme (420), welche sich von besagtem unteren Anschlussstutzen (410) gekurvt nach unten erstrecken, um einer Außenfläche (101) der besagten Begrenzungseinheit (100) zu entsprechen.

4. Ein Winkeleinstellungs-Mechanismus (1) nach Anspruch 1, wobei die Begrenzungseinheit (100) eine Außenfläche (101) hat, die eingerückt ist, um den ersten Führungskanal (110) zu formen, welcher dort längs der ersten imaginären Ebene (P1) liegt und weiterhin eingerückt, um den zweiten Führungskanal (120) zu formen, welcher längs der zweiten imaginären Ebene (P2) liegt.

5. Die Winkeleinstellungs-Mechanismus (1) nach Anspruch 4, wobei der erste Führungskanal (110) eine untere Wand (111) hat, welche mit einer Vielzahl von beabstandeten ersten Haltelöchern (112) gebildet ist, während der zweite Führungskanal (120) eine Bodenwand (111) hat, die mit einer Vielzahl von beabstandeten zweiten Haltelöchern (122) gebildet ist.

6. Der Winkeleinstellungs-Mechanismus (1) nach Anspruch 5, wobei die untere Klemmeinheit (200) ferner über ein Paar von unteren Begrenzungsvorsprüngen (221) verfügt, die nach innen von zwei gegenüberliegenden Enden von diesen hervorragen und sich bis in ein entsprechendes Paar der besagten ersten Haltelöcher ( 112) in dem besagten ersten Führungskanal (110) erstrecken, wobei die obere Klemmeinheit (400) ferner über ein Paar von oberen Begrenzungsvorsprüngen (421) verfügt, die nach innen von zwei gegenüberliegenden Enden von diesen hervorragen und sich bis in ein entsprechendes Paar der zweiten Haltelöcher (122) in dem zweiten Führungskanal (120) erstrecken.

7. Die Winkeleinstellungs-Mechanismus (1) nach Anspruch 1, wobei das Befestigungselement (600) im Allgemeinen C-förmig ist und über zwei distale Enden verfügt, die mit einer Befestigungsstruktur (610) versehen sind.

8. Die Winkeleinstellungs-Mechanismus (1) nach Anspruch 7, wobei die Außenfläche (101) der Begrenzungseinheit (100) mit einer Eingriffsaussparung (130) gebildet ist, und wobei das Befestigungselement (600) ferner einen Eingriffsblock (620 ) innen von diesem ausgebildet hat, und sich mit der Eingriffsaussparung (130) in der Außenfläche (101) der genannten Begrenzungseinheit (100) einklinkt.

9. Der Winkeleinstellungs-Mechanismus (1) nach Anspruch 1, welcher auf eine Tastatur, Maus oder einen Joystick eines Personalcomputers angewandt wird, sodass die obere Abdeckungseinheit (500) und die unteren Sitzeinheit (300) jeweils als obere und untere Gehäusehälfte von Tastatur, Maus oder Joystick dienen.

10. Der Winkeleinstellungs-Mechanismus (1) nach Anspruch 1, der dazu verwandt wird, um eine Tastatur, eine Maus oder einen Joystick eines Personalcomputers, welche bzw. welcher darüber positioniert ist, zu stützen, sodass die besagte Tastatur, Maus oder Joystick auf der besagten oberen Abdeckungseinheit (500) angebracht ist.

11. Der Winkeleinstellungs-Mechanismus (1) nach Anspruch 1, der dazu verwandt wird, um eine Tastatur, eine Maus oder einen Joystick eines Personalcomputers, welche bzw. welcher darüber positioniert ist, zu stützen, sodass die besagte Abdeckungseinheit (500) als untere Gehäusehälfte von besagter Tastatur, Maus oder Joystick dient.

## Revendications

1. Un mécanisme de réglage angulaire (1) comprenant:
une unité de limitation (100) formée avec un premier canal de guidage (110) s'étendant le long du premier plan imaginaire (P1) et un second canal de guidage (120) s'étendant le long d'un second plan imaginaire (P2);
un module de calage inférieur (200) ayant une structure en forme de U inversée et étant reçu à l'intérieur dudit premier canal de guidage (110) le long dudit premier plan imaginaire (P1);
une unité de siège inférieure (300) disposée au-dessous et soutenant ledit module de calage inférieure (200) par en dessous;
un module de calage supérieur (400) ayant une structure en forme de U inversée et étant reçu à l'intérieur dudit second canal de guidage (120) le long dudit second plan imaginaire (P2) de telle sorte que lesdits modules de calage inférieures et supérieurs (200), (400) sont situés à deux côtés opposés de ladite unité de limitation mentionnée (100) avec lesdits premiers et seconds plans imaginaires (P1), (P2) traversant perpendiculairement l'un l'autre; [[et]]
une unité de couvercle supérieure (500) disposée au-dessus et relié à ledit module de calage supérieur (400); et
un élément de fixation (600) sous la forme d'une structure annulaire et entourant ladite unité de limitation (100) de telle manière qu'au moins des parties desdits modules de calage inférieurs et supérieurs (200), (400) sont serrées entre ledit élément de fixation (600) et ladite unité de limitation (100);
**caractérisé par**, où, la position de réglage dudit module de calage inférieur (200) et ladite unité de limitation (100) le long dudit premier plan imaginaire (P1) et ledit module de calage supérieur (400) et ladite unité de limitation (100) le long dudit second plan imaginaire (P2) il résulte en changeant une position angulaire de ladite unité de couvercle supérieure (500) par rapport à ladite unité de siège inférieure (300).

2. Le mécanisme de réglage angulaire (1) selon la revendication 1, où ledit module de calage inférieur (200) comprend de plus
un élément de raccordement inférieur (210) pour la connexion avec ladite unité de siège inférieure (300), et
deux bras de serrage inférieurs (220) s'étendant vers l'haut et incurvés à partir dudit élément de raccordement inférieur (210) afin de s'adapter à une surface extérieure (101) de ladite unité de limitation (100).

3. Le mécanisme de réglage angulaire (1) selon la revendication 1, où ledit module de calage supérieur (400) comprend de plus
un élément de raccordement supérieur (410) pour la connexion avec ladite unité de couvercle supérieure (500) par le dessous, et deux bras de serrage supérieurs (420) s'étendant vers le bas et incurvés à partir dudit élément de raccordement supérieur (410) afin de s'adapter à une surface extérieure (101) de ladite unité de limitation (100).

4. Le mécanisme de réglage angulaire (1) selon la revendication 1, où ladite unité de limitation (100) comporte une surface extérieure (101) engrenée à former ledit premier canal de guidage (110) ci-inclus s'étendant le long dudit premier plan imaginaire (P1) et engrenée de plus à former ledit second canal de guidage (120) ci-inclus s'étendant le long dudit second plan imaginaire (P2).

5. Le mécanisme de réglage angulaire (1) selon la revendication 4, où ledit premier canal de guidage (110) comporte un mur inférieur (111) formé avec une pluralité des trous espacés de première rétention (112) tandis que ledit second canal de guidage (120) comporte un mur inférieur (111) formé avec une pluralité des trous espacés de seconde rétention (122).

6. Le mécanisme de réglage angulaire (1) selon la revendication 5, où ledit module de calage inférieur (200) comporte de plus une paire de saillies de limitation inférieures (221) en saillie vers l'intérieur à partir de deux extrémités opposées de celui-ci et s'étendant dans la paire correspondante desdits trous de première rétention (112) dans ledit premier canal de guidage (110), ledit module de calage supérieur (400) ayant de plus une paire de saillies de limitation supérieures (421) en saillie vers l'intérieur à partir de deux extrémités opposées de celui-ci et s'étendant dans la paire correspondante desdits trous de seconde rétention (122) dans ledit second canal de guidage (120).

7. Le mécanisme de réglage angulaire (1) selon la revendication 1, où ledit élément de fixation (600) est généralement en forme de C et comporte deux extrémités distales pourvues d'une structure de fixation (610).

8. Le mécanisme de réglage angulaire (1) selon la revendication 7, où ladite surface extérieure (101) de ladite unité de limitation (100) est formée avec un évidement d'engagement (130), ledit élément de fixation (600) ayant de plus un bloc d'engagement (620 ) formé à l'intérieur de celui-ci et enclenchant ledit évidement d'engagement (130) dans ladite surface extérieure (101) de ladite unité de limitation (100).

9. Le mécanisme de réglage angulaire (1) selon la revendication 1 est appliqué sur un clavier, une souris ou un levier de commande d'un ordinateur personnel de telle sorte que ladite unité couvercle supérieure (500) et ladite unité de siège inférieure (300) servent respectivement comme des demi-boîtiers supérieurs et inférieurs dudit clavier, souris ou levier de commande

10. Le mécanisme d'ajustement angulaire (1) selon la revendication 1 est utilisé pour soutenir un clavier, une souris ou un levier de commande d'un ordinateur personnel là-haut tel que le clavier, la souris ou le levier de commande est monté sur ladite unité de couvercle supérieure (500).

11. Le mécanisme de réglage angulaire (1) selon la revendication 1 est utilisé pour soutenir un clavier, une souris ou un levier de commande d'un ordinateur personnel là-haut tel que ladite unité de couvercle supérieure (500) sert comme un demi-boîtier inférieur dudit clavier, souris ou levier de commande.
